(19) **Europäisches Patentamt**

**European Patent Office**

**Office européen des brevets**

(11) **EP 1 027 811 B1**

(12) **EUROPÄISCHE PATENTSCHRIFT**

(45) Veröffentlichungstag und Bekanntmachung des Hinweises auf die Patenterteilung:
**31.07.2002  Patentblatt 2002/31**

(21) Anmeldenummer: **98959768.7**

(22) Anmeldetag: **29.10.1998**

(51) Int Cl.⁷: **H04Q 7/30**

(86) Internationale Anmeldenummer:
**PCT/DE98/03161**

(87) Internationale Veröffentlichungsnummer:
**WO 99/22470 (06.05.1999 Gazette 1999/18)**

(54) **VERFAHREN, SENDE/EMPFANGSEINRICHTUNG UND FUNK-KOMMUNIKATIONSSYSTEM ZUR DATENÜBERTRAGUNG**

TRANSMISSION/RECEPTION PROCESS AND DEVICE AND RADIO COMMUNICATIONS SYSTEM FOR DATA TRANSMISSION

PROCEDE ET DISPOSITIF DE TRANSMISSION ET DE RECEPTION ET SYSTEME DE RADIOCOMMUNICATION UTILISE POUR TRANSMETTRE DES DONNEES

(84) Benannte Vertragsstaaten:
**DE FR GB IT**

(30) Priorität: **29.10.1997  DE 19747804**

(43) Veröffentlichungstag der Anmeldung:
**16.08.2000  Patentblatt 2000/33**

(73) Patentinhaber: **SIEMENS AKTIENGESELLSCHAFT**
**80333 München (DE)**

(72) Erfinder:
- **BESSON, Marcus**
  **D-82008 Unterhaching (DE)**
- **VON DER NEYEN, Hans**
  **D-81825 München (DE)**
- **KAMMERLANDER, Karl**
  **D-81543 München (DE)**

(56) Entgegenhaltungen:
| | |
|---|---|
| WO-A-94/01956 | WO-A-97/30526 |
| US-A- 4 799 252 | US-A- 5 422 932 |
| US-A- 5 592 480 | |

EP 1 027 811 B1

**Beschreibung**

Die Erfindung betrifft ein Verfahren, eine Sende/Empfangseinrichtung und ein Funk-Kommunikationssystem zur Datenübertragung in einem GSM-Mobilfunknetz, insbesondere zwischen Basisstationen und Mobilstationen über eine TD/CDMA-Funkschnittstelle.

Aus der WO 97/30526 ist ein Verfahren, eine Sende/Empfangseinrichtung und ein Funk-Kommunikationssystem gemäß den Oberbegriffen der Ansprüche 1, 16 und 17 bekannt.

In Mobilfunknetzen werden Nachrichten (beispielsweise Sprache, Bildinformationen oder andere Daten) mit Hilfe von elektromagnetischen Wellen über eine Funkschnittstelle zwischen sendender und empfangender Funkstation (Basisstation bzw. Mobilstation) übertragen. Das Abstrahlen der elektromagnetischen Wellen erfolgt dabei mit Trägerfrequenzen, die in dem für das jeweilige System vorgesehenen Frequenzband liegen. Beim GSM (Global System for Mobile Communication) liegen die Trägerfrequenzen im Bereich von 900, 1800 bzw. 1900 MHz. Für zukünftige Mobilfunknetze mit TDMA- oder TD/CDMA-Übertragungsverfahren über die Funkschnittstelle, beispielsweise das UMTS (Universal Mobile Telecommunication System) oder andere Systeme der 3. Generation sind Frequenzen im Frequenzband von ca. 2000 MHz vorgesehen.

Aus DE 195 49 148 A1 ist ein Funk-Kommunikationssystem bekannt, das eine CDMA-Teilnehmerseparierung (CDMA Code Division Multiple Access) nutzt, wobei die Funkschnittstelle zusätzlich eine Zeitmultiplex-Teilnehmerseparierung (TDMA Time Division Multiple Access) aufweist. Es wird folglich ein TD/CDMA-Übertragungsverfahren für die Funkschnittstelle genutzt. Empfangsseitig wird ein JD-Verfahren (JD Joint Detection) angewendet, um unter Kenntnis von Spreizcodes mehrerer Teilnehmer eine verbesserte Detektion der übertragenen Daten vorzunehmen. Dabei ist es bekannt, daß einer Verbindung über die Funkschnittstelle zumindest zwei Datenkanäle zugeteilt werden können, wobei jeder Datenkanal durch einen individuellen Spreizcode unterscheidbar ist. Das hierbei gezeigte Funk-Kommunikationssystem ist ein Kandidat für ein System der 3. Mobilfunkgeneration.

Aus P. Vary, "Implementation Aspects of the Pan-European digital mobile radio systems, IEEE 1989, S.4-17 bis 4-22, ist die Struktur einer GSM Funkstation mit HF-Teil, Filtern, Kanalschätzern, Modulatoren/Demodulatoren, Kanalcodierern/ Kanaldecodierern bekannt. Der GSM-Standard benutzt eine Kombination von FDMA (Frequency Division Multiple Access) und TDMA für die Funkschnittstelle und hat weltweite Akzeptanz gefunden. Über 20 Mio. Teilnehmer werden allein in Europa über diesen Standard bedient. Umfangreiche Investionen in die Infrastruktur und in Mobilstationen wurden bisher getätigt.

Der Übergang von der 2. Mobilfunkgeneration (GSM) zur 3. Mobilfunkgeneration wird für die Netzbetreiber wiederum erhebliche Investitionen erfordern, wenn Netzelemente wie Mobilvermittlungsstelle, Basisstationscontroller oder Basisstationen ausgetauscht oder zusätzlich installiert werden müssen. Auch durch die Hersteller der Infrastruktur und der Mobilstationen sind bedeutende Entwicklungsaufwendungen nötig.

Der Erfindung liegt die Aufgabe zugrunde, Verfahren und Funk-Kommunikationssysteme zur Datenübertragung in einem Mobilfunknetz anzugeben, die eine aufwandsgünstige Migration von einem bestehenden GSM-Mobilfunknetz erlauben. Diese Aufgabe wird durch das Verfahren mit den Merkmalen des Patentanspruchs 1, die Sende-/Empfangseinrichtung gemäß Anspruch 16 und das Funk-Kommunikationssystem mit den Merkmalen des Patentanspruchs 17 gelöst. Vorteilhafte Weiterentwicklungen sind den Unteransprüchen zu entnehmen.

In einem GSM-Mobilfunknetz mit zumindest einem Basisstationscontroller und einer Basisstation wird zwischen der Basisstation und Mobilstationen zumindest ein erster Frequenzkanal zur Datenübertragung und zur Übertragung von Signalisierungsinformation mit einem TDMA-Übertragungsverfahren und zusätzlich ein zweiter breitbandiger Frequenzkanal mit einem TD/CDMA-Übertragungsverfahren zur Verfügung gestellt. Die Zeitraster beider Frequenzkanäle sind dabei miteinander synchronisiert. Durch die Basisstation wird in einem Zeitschlitz das TDMA- und/oder das TD/CDMA-Übertragungsverfahren unterstützt, so daß in dem Zeitschlitz eine Verbindung im ersten oder zweiten Frequenzkanal aufgebaut werden kann.

Dies bedeutet, daß ausgehend von einer bereits erschlossenen Basisstationslage durch Nachrüsten einer bereits im GSM-Netz installierten Basisstation, wobei dieses für die Trägerfrequenzen im Bereich von 900, 1800 bzw. 1900 MHz gleichermaßen gilt, ein neues Übertragungsverfahren angeboten wird. Damit entfallen zusätzliche Aufwendungen zum Erschießen einer neuen Basisstationslage. Durch schrittweises Nachrüsten der Basisstationen wird die Abdeckung in einer Weise verbessert, die es erlaubt, die zusätzlichen funktechnischen Kapazitäten erst dort zu schaffen, wo sie im ausreichendem Maße nachgefragt werden. Die Investitionsrisiken für Netzbetreiber werden dadurch gesenkt.

Ohne die Versorgung von GSM-Mobilstationen zu vernachlässigen kann punktuell eine Versorgung von Mobilstationen, die nach einem TD/CDMA-Übertragungsverfahren die Funkschnittstelle nutzen, gesichert werden. Für GSM-Mobilstationen und Mixed-Mode Mobilstationen, die beide Frequenzkanäle bedienen können, ist eine volle Abdeckung gewährleistet und für bestimmte Regionen können zusätzliche neue, höherrate Dienste angeboten werden.

Durch die Synchronisierung der Zeitraster beider Übertragungsverfahren können viele Komponenten, z.B. Taktgeber, Frequenzgeneratoren, Schnittstellenelemente zur Antenneneinrichtung oder bei der Basisstation zum Basisstationscontroller, in Basisstationen und Mobilstationen auch für das TD/CDMA-Übertragungsverfahren genutzt.

Eine Verbindung kann somit in einem Zeitschlitz im TDMA-Übertragungsverfahren oder im TD/CDMA-Übertragungsverfahren aufgebaut werden, je nachdem, welches Übertragungsverfahren oder welcher Dienst angefordert wird. Es ist ebenso möglich, daß durch die Basisstation in einem Zeitschlitz beide Übertragungsverfahren parallel angeboten werden oder zu einer Mobilstation beide Übertragungsverfahren eingesetzt werden. Vorhandene funktechnische Ressourcen bilden in der Basisstation einen Pool, aus dem für einzelne Dienste bzw. Übertragungsverfahren die entsprechenden Kanäle entnommen werden können, dies entspricht einem "Trunking"-Effekt. Diese funktechnischen Ressourcen werden somit besser ausgenutzt, da sie für jede Basisstation eines Funk-Kommuniktionssystems administrierbar sind, d.h. fest oder dynamisch zugeordnet werden können.

Zwischen den Übertragungsverfahren ist auch eine Übergabe möglich. Dies schließt nicht nur bereits aufgebaute Verbindungen ein, sondern ist auf Fälle anwendbar, in denen eine Mobilstation Organisations- oder Signalisierungsinformationen in einem Frequenzkanal, vorteilhafterweise dem ersten Frequenzkanal, empfängt bzw. Signalisierungsinformation sendet, die Übertragung der Nutzinformationen jedoch im anderen Frequenzband, beispielsweise dem zweiten Frequenzband stattfindet. Die Zuweisung eines Übertragungsverfahrens erfolgt folglich entsprechend einer Anforderung durch die Mobilstation oder entsprechend der Tauglichkeit dieser Mobilstation für ein oder mehrere Übertragungsverfahren.

Die Migration von bestehenden GSM-Mobilfunknetzen zu einem Funk-Kommunikationssystem der 3. Generation wird dadurch wesentlich vereinfacht. Das TD/CDMA-Übertragungsverfahren verbindet Vorteile des bekannten TDMA-Übertragungsverfahrens mit denen der einfachen Verwirklichung von höherratigen Diensten mit variabler Datenrate mit Hilfe eines CDMA-Teilnehmerseparierungsverfahrens, wobei beide Übertragungsverfahren ein gleiches Zeitraster nutzen. Somit ist das TD/CDMA-Übertragungsverfahren auch in bestehenden GSM-Mobilfunknetzen einsetzbar, d.h. es wird ggf. kein neues Frequenzband benötigt. Ein Netzbetreiber kann sein zur Verfügung stehendes Frequenzspektrum in Frequenzbänder aufteilen, so daß in einem zweiten Frequenzband die TD/CDMA-Übertragung zur Verfügung steht.

Durch das breitbandige Auslegen des zweiten Frequenzkanals können die Sende/Empfangseinrichtungen im Vergleich zu einer Vielzahl von schmalbandigen Frequenzkanälen wirtschaftlicher hergestellt werden, da weniger HF-Komponenten benötigt werden und fortschreitend bessere und billiger digitale Signalverarbeitungsmittel die empfangs- und sendeseitige Signalverarbeitung erleichtern.

Nach einer vorteilhaften Weiterbildung der Erfindung überlappen sich die Frequenzbänder des ersten und zweiten Frequenzkanals zumindest teilweise. Dies bedeutet, daß das TD/CDMA-Übertragungsverfahren in dem GSM-Mobilfunksystem vorbehaltenen Frequenzbändern zum Einsatz kommt. Durch entsprechende Frequenzplanung werden zumindest einzelnen Basisstationen mehrere zusammenhängende Frequenzbänder zugewiesen, die dann auch vom breitbandigeren zweiten Frequenzkanal genutzt werden. Besonders vorteilhaft wird dies realisiert, wenn das Frequenzband des zweiten Frequenzkanals zumindest acht Frequenzkanäle mit einer Bandbreite gleich dem ersten Frequenzkanal umfaßt. Der zweite Frequenzkanal hat beispielsweise eine Bandbreite von 1,6 oder 3,2 MHz und umfaßt somit acht oder 16 bisherige 200 kHz schmalbandige GSM-Frequenzbänder. Der zweite Frequenzkanal ist also an das Frequenz- und Zeitraster des GSM-Mobilfunknetzes angepaßt.

Eine weitere vorteilhafte Ausprägung der Erfindung sieht vor, daß der erste und zweite Frequenzkanal im gleichen Frequenzband, jedoch in unterschiedlichen Zeitschlitzen realisiert werden. Dies ist besonders in Funkzellen von Vorteil, in denen ohne zusätzliche Frequenzbänder zu benötigen, GSM-, TD/CDMA- und Mixed-Mode Mobilstationen versorgt werden sollen. Bedarfsgerecht können die Zeitschlitze auf die zwei Übertragungsverfahren verteilt werden.

Die Verteilung mehrerer Verbindungen auf die Zeitschlitze wird durch den Basisstationscontroller vorteilhäfterweise derartig gesteuert, daß ein Zeitschlitz von einem TDMA- bzw. TD/CDMA-Übertragungsverfahren für das jeweilige andere Übertragungsverfahren übergeben wird. Damit wird erreicht, daß die Zeitschlitze mit Verbindungen gut gefüllt sind und möglichst viele Zeitschlitze bei Bedarfsschwankungen einem stärker nachgefragten Übertragungsverfahren zugeteilt werden. Auf diese Weise blockieren keine einzelnen GSM-Zeitschlitze die Benutzung eines Zeitschlitzes über die ganze Bandbreite des zweiten Frequenzkanals, der eine höhere Übertragungskapazität aufweist. Gleiches gilt für ein umgekehrtes Neuverteilen der Verbindungen.

Die Übergabe einer Verbindung zu einem anderen Zeitschlitz des gleichen oder jeweilig anderen Übertragungsverfahrens erfolgt, sobald die Auslastung des Frequenzkanals unter einen ersten Schwellwert sinkt oder das Verhältnis von Mobilstation mit TD/CDMA-Tauglichkeit zu sonstigen Mobilstation innerhalb einer Funkumgebung einen zweiten Schwellwert erreicht. Durch die Einführung der Schwellwerte wird der bisherige Bedarf oder der zukünftige Bedarf, der sich aus den in der Funkzelle befindlichen Mobilstationen ableiten läßt, abgeschätzt und durch rechtzeitiges Verteilen der Verbindungen die funktechnischen Ressourcen bestmöglich genutzt.

Betrachtet man ein Funk-Kommunikationssystem mit mehreren Basisstationen, von denen die erste beide Frequenzkanäle unterstützt und die zweite nur das TDMA-Übertragungsverfahren des GSM-Standards unterstützt, so erfolgen vorteilhafterweise Übergaben von Verbindungen von der zweiten Basisstationen ohne TD/CDMA-Tauglichkeit bevorzugt zur ersten Basisstation. Die zweite Basisstation wird durch die zwei Frequenzkanäle über umfangreichere funktechnische Ressourcen verfügen. Die Übergaben zwischen den Basisstationen können auch nach vorgenannten Prinzipien und Schwellwerten vorgenommen werden.

Das GSM-Mobilfunknetz stellt in jeder Basisstation Organisations- und Signalisierungskanäle bereit, die flächendeckend verfügbar sind. Vorteilhafterweise wird zur Übergabe von Verbindungen oder für einen Verbindungsaufbau die Signalisierungsinformation des ersten Frequenzkanals benutzt. Damit werden auch bei nicht überlappenden Frequenzkanälen keine oder nur geringe zusätzlichen Signalisierungsaufwendungen nötig und zusätzliche Kapazitäten können besser für eine Nutzinformationsübertragung genutzt werden.

Eine weitere vorteilhafte Weiterbildung der Erfindung sieht vor, daß zur Übergabe von Verbindungen oder für einen Verbindungsaufbau eine Abfrage einer gewünschten Datenrate erfolgt, und danach der erste oder zweite Frequenzkanal ausgewählt wird. Damit kann bereits bei Verbindungsaufbau oder bei einer während der Verbindung gewünschten größeren oder kleineren Datenrate eine entsprechende Zuteilung eines Übertragungsverfahrens vorbereitet werden. Dabei ist der erste Frequenzkanal für Sprachübertragung und kleinere Datenraten und der zweite Frequenzkanal für höherratige Dienste (Internet oder Multimediadienste) besser geeignet.

Das Nachrüsten der Basisstation erfolgt durch Einsatz von zusätzlichen Sende/Empfangseinrichtungen für die TD/CDMA-Übertragung oder durch Ersatz einer GSM-Sende/Empfangseinrichtung durch eine gemeinsame Sende/Empfangseinrichtung für beide Übertragungsverfahren. Trotz des Nachrüstens können jedoch gemeinsame Baugruppen, wie zum Beispiel Antennen, HF-Komponenten, Verstärker, Synchronisations- und Taktbaugruppen, Schnittstellen zum Basisstationscontroller etc. gemeinsam benutzt werden.

Es liegt im Rahmen der Erfindung, daß der erste und zweite Frequenzkanal unterschiedlichen Zellgrößen gemäß einem hierarchischen Zellmodell zugeordnet sind. Während einer Migrationsphase kann es vorteilhaft sein, den zweiten Frequenzkanal für die TD/CDMA-Übertragung nur in bestimmten eng begrenzten Räumen anzubieten ("hot spots"), d.h. Mikrozellen damit auszustatten, oder für Funkzellen mit allgemein niedrigen Dichten an neuen Mixed-Mode Mobilstationen Makrozellen auszustatten.

Das erfindungsgemäße Verfahren läßt weiterhin freien Gestaltungsspielraum im Verhältnis von Aufwärts- und Abwärtsrichtung. Im Sinne einer asymmetrischen Informationsübertragung, wie sie für Multimediadienste benötigt werden, können in beide Übertragungsrichtungen unterschiedliche Datenraten benutzt werden. Alternativ können in Aufwärts- und Abwärtsrichtungen gleiche Frequenzbänder, jedoch unterschiedliche Zeitschlitze benutzt werden. Damit kann auch die Nutzung von DECT-Funk-Kommunikationssystemen eingeschlossen werden.

Der zweite Frequenzkanal kann alternativ zu TD/CDMA-Verfahren, wie es aus DE 195 49 148 bekannt sind, andere Verfahren nutzen, die auf der gleichen Zeitrahmenstruktur wie das GSM-Mobilfunknetz beruhen, jedoch eine Spreizung gemäß einer Frequenzsprungsequenz oder eine breitbandige Übertragung gemäß einer OFDM-Übertragung nach WO98/43384 nutzen.

Ausführungsbeispiele der Erfindung werden anhand der beiliegenden Zeichnungen näher erläutert.

Dabei zeigen

| | |
|---|---|
| FIG 1 | ein Blockschaltbild eines Funk-Kommunikationssystems, |
| FIG 2 | ein Konvergenzprinzip für verschiedene Übertragungsdienste in einem Funk-Kommunikationssystem, |
| FIG 3, 4 | eine Darstellung der Frequenzbänder für getrennte oder sich überlappende Frequenzkanäle, |
| FIG 5 bis FIG 8 | verschiedene Kombinationen von Mobilstationen und Basisstationen und ihre Fähigkeit TDMA und TD/CDMA Übertragungsverfahren zu unterstützen, |
| FIG 9 | eine schematische Darstellung der Signalisierung zum Verbindungsaufbau, |
| FIG 10a,b | eine schematische Darstellung von Zeitrahmenstrukturen, |
| FIG 11 | ein Blockschaltbild der Signalverarbeitungsmittel, |
| FIG 12 | ein Blockschaltbild vom HF-Teil des Senders, |
| FIG 13 | ein Blockschaltbild vom HF-Teil des Empfängers, |
| FIG 14 | ein detailliertes Blockschaltbild vom Sender für die TD/CDMA-Übertragung, und |
| FIG 15 | ein detailliertes Blockschaltbild vom Empfänger für die TD/CDMA-Übertragung. |

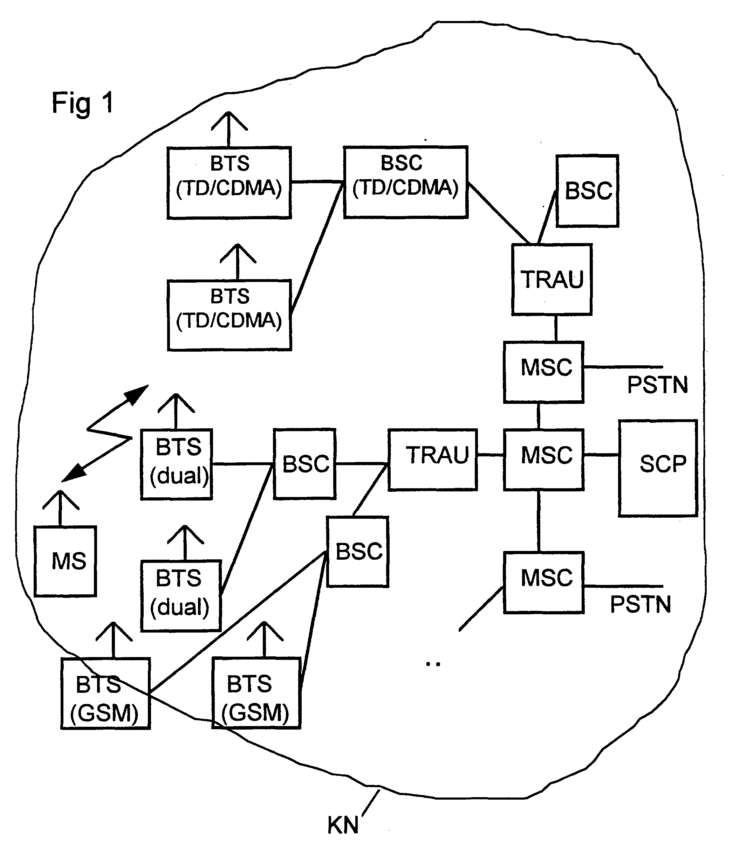

Das in FIG 1 dargestellte Funk-Kommunikationssystem KN entspricht in seiner Struktur einem bekannten GSM-Mobilfunknetz, das aus einer Vielzahl von Mobilvermittlungsstellen MSC besteht, die untereinander vernetzt sind bzw. den Zugang zu einem Festnetz PSTN herstellen. Weiterhin sind diese Mobilvermittlungsstellen MSC über eine Transcodiereinrichtung TRAU zum Kodieren und Dekodieren von Daten mit jeweils zumindest einem Basisstationscontroller BSC verbunden. Jeder Basisstationscontroller BSC ermöglicht wiederum eine Verbindung zu zumindest einer Basisstation BTS. Eine solche Basisstation BTS ist eine Funkstation, die über eine Funkschnittstelle eine Funkverbindung zu Mobilstationen MS aufbauen kann. Eine Dienstesteuerungseinheit SCP im Sinne eines intelligenten Netzes (IN) realisiert Funktionen zum Software-Update für das Mobilfunknetz bzw. für Teile davon.

Bei der Aufteilung des Mobilfunknetzes kann in Einrichtungen BTS, BSC unterschieden werden, die Dienste nach dem GSM-Standard, Dienste nach einem Standard der 3. Generation (UMTS) mit TD/CDMA-Funkschnittstelle oder die beide Standards unterstützen. Die Funkzellen der entsprechenden Basisstationen BTS(dual), BTS(GSM), BTS(TD/CDMA) können sich dabei auch überlagern.

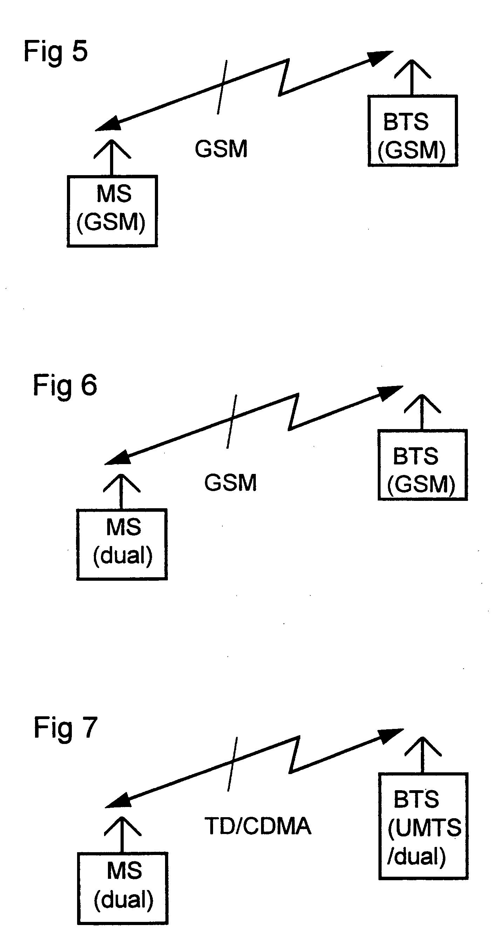

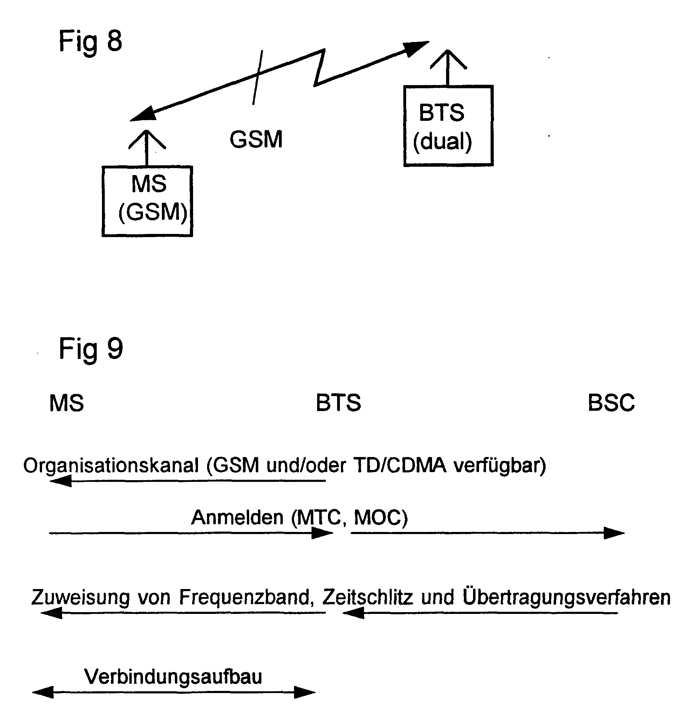

Die Mobilität der Mobilstationen MS soll entsprechend der Erfindung nicht durch die unterschiedlichen verfügbaren Standards behindert werden. Eine Mobilstation MS, die nur den GSM-Standard unterstützt, kann weiterhin eine Funkverbindung zu einer Basisstation BTS des GSM-Standards aufbauen (Fig. 5). Die Mobilstation MS kann jedoch ebenso von einer Basisstation BTS versorgt werden, die dual beide Standards (TD/CDMA, GSM) unterstützt (Fig. 8). Eine Basisstation BTS, die TD/CDMA- und TDMA-Übertragung nach GSM unterstützt, ist eine Basisstation nach der Erfindung.

Eine Mixed-Mode Mobilstation MS, die beide Standards unterstützt (Fig. 6 und 7), kann sowohl mit einer GSM-Basisstation BTS(GSM), als auch mit einer Basisstation BTS kommunizieren, die nur eine TD/CDMA-Übertragung oder beide Übertragungsverfahren zuläßt.

Eine Mobilstation MS oder eine Basisstation BTS, die TD/CDMA und GSM-Übertragung unterstützen, müssen nicht ständig alle dafür notwendigen Programmodule gespeichert haben. Ein Laden von Programmodulen ersetzt oder ergänzt die vorhandenen Programmodule im Sinne eines Software-Updates oder einer Parametereinstellung und erfolgt mit netzseitiger Unterstützung durch die Dienstesteuerungseinheit SCP.

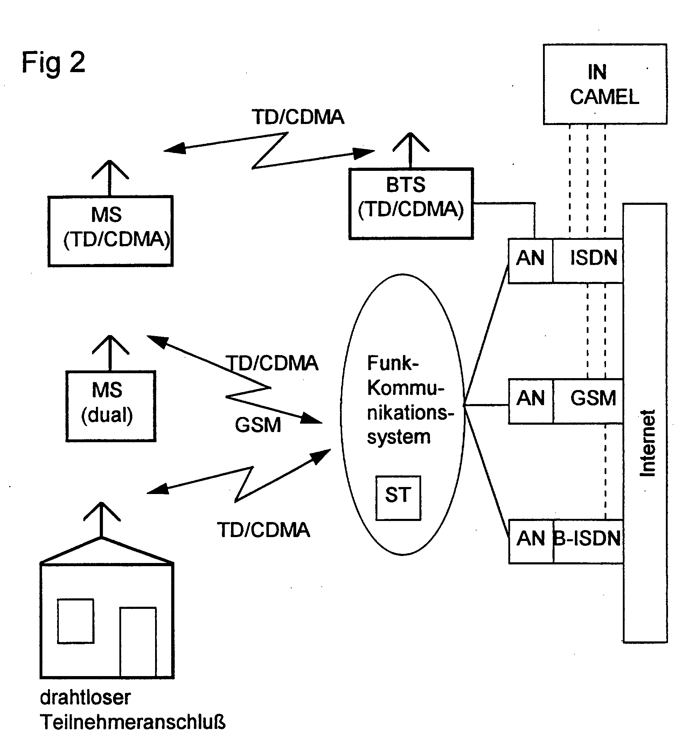

Mit Unterstützung intelligenter Netze IN (insbesondere das CAMEL-Protokoll des GSM-Mobilfunknetzes) ist ein Zusammenfassen bisher getrennter Funktionen von Kommunikationsnetzen nach FIG 2 möglich. Mittels einer TD/CDMA-Übertragung kann neben einer Anbindung mobiler Funkstationen (Mobilstation MS) auch ein drahtloser Anschluß fester Funkstationen (wireless in the local loop) erfolgen. Weiterhin kann auch im Indoor-Bereich ein Anschluß von Basisstationen BTS (TD/CDMA) über eine ISDN-Leitung erfolgen, so daß im Sinne schnurloser Teilnehmerendgeräte eine Heimbasisstation zur Verfügung steht. Hierbei kann ggf. auf eine Frequenzplanung für die Hiembasisstation verzichtet werden, wenn die Sendeleistungen entsprechend limitiert sind. Ein Funk-Kommunkationssystem entsprechend der Erfindung kann über konfigurierbare UMTS Zugriffsknoten AN über ISDN, GSM-(PCM) oder B-ISDN-Leitungen mit Internet- oder anderen Übertragungsnetzen verbunden werden.

Die genutzten Dienste und die zur Übertragung genutzten Kommunikationsnetze werden somit trennbar, so daß unterschiedliche Dienste auch von unterschiedlichen Kommunikationsnetze bereitgestellt werden können. Eine Vielzahl von Anwendungsservern kann unabhängig vom Kommunikationsnetz genutzt werden, wobei unterschiedliche Kommunikationsnetze beispielsweise mit ATM-Übertragungsstrecken verbunden sind.

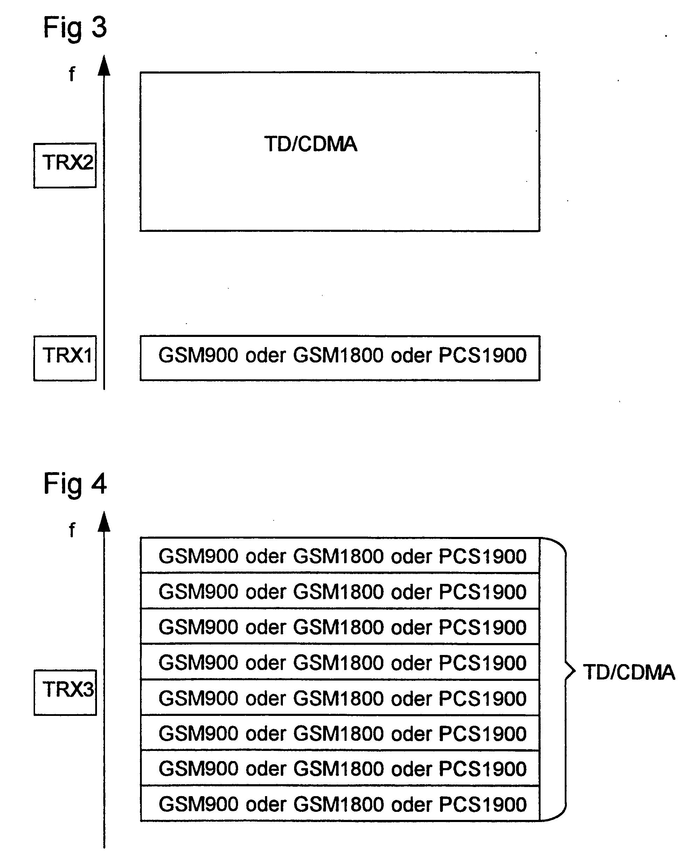

Wird die Funkschnittstelle zwischen einer ersten Basisstation BTS und weiteren Funkstationen MS (TD/CDMA), MS(dual) betrachtet, dann sind Frequenzbänder nach FIG 3 und 4 auf die beiden Übertragungsverfahren aufteilbar. In FIG 3 umfaßt ein GSM900, GSM1800 oder PCS1900 Frequenzband einen ersten Frequenzkanal mit 200 kHz Bandbreite. Dieser erste Frequenzkanal wird durch eine erste Sende/Empfangseinrichtung TRX1 realisiert. Ein zweites Frequenzband für eine UMTS-Übertragungsverfahren bei ca. 2000 MHz ist getrennt und umfaßt einen zweiten Frequenzkanal für eine TD/CDMA-Übertragung. Dieser zweite Frequenzkanal wird durch eine zweite Sende/Empfangseinrichtung TRX2 realisiert.

Mixed-Mode Mobilstationen MS sind dabei in der Lage, beide Frequenzkanäle auszuwerten. Insbesondere werden nur im ersten Frequenzkanal von der Basisstation BS gesendete Organisations- und Signalisierungsinformationen auch für den Verbindungsaufbau, für eine Übergabe und für Nachbarzellenmessungen empfangen und ausgewertet.

In FIG 4 überlappen sich die Frequenzbänder des ersten und zweiten Frequenzkanals, d.h. acht erste schmalbandige 200 kHz Frequenzkanäle bilden einen breitbandigen 1,6 MHz Frequenzkanal für die TD/CDMA-Übertragung, der durch eine dritte Sende/Empfangseinrichtung TRX3 realisiert wird. Das TD/CDMA-Übertragungsverfahren wird also in einem GSM-Frequenzband verwirklicht.

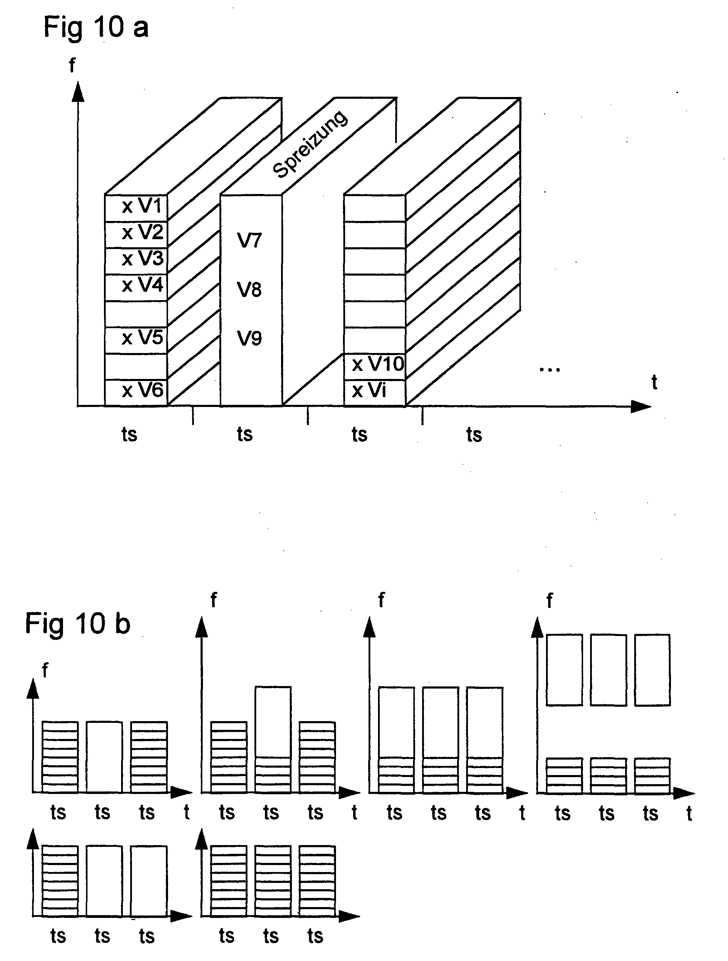

In FIG 10a wird verdeutlicht, daß die Unterscheidung der beiden Übertragungsverfahren anhand von Zeitschlitzen ts innerhalb der beiden Übertragungsverfahren gemeinsamen TDMA-Rahmenstruktur erfolgt. Es sind beispielhaft drei Zeitschlitze ts gezeigt, wobei der erste Zeitschlitz ts acht GSM-Kanäle enthält, von denen 6 mit Verbindungen V1 bis V6 belegt sind. Im zweiten Zeitschlitz ts kommt gemäß dem TD/CDMA-Verfahren eine Spreizung mit individuellen Spreizcodes hinzu, so daß drei Verbindungen V7 bis V9 übertragen werden. Den Verbindungen V7 bis V9 können dabei durch Zuweisungen mehrerer Spreizkodes entsprechend höhere Datenrate ermöglicht werden. Im dritten Zeitschlitz ts sind nur zwei GSM-Kanäle durch Verbindungen V10 und Vi belegt.

Die Funkschnittstelle des TD/CDMA-Verfahren kann folgendermaßen festgelegt werden:

- acht Zeitschlitze ts pro Rahmen,
- 64 Fullrate-Sprachkanäle pro Rahmen,
- 8 Spreizcodes pro Zeitschlitz,
- Bandbreite 1,6 MHz (alternativ 3,2 MHz),
- Funkblocklänge 577 µs,
- QPSK oder 16 QAM-Modulation von zu übertragenden Daten,
- linearisierte GMSK gespreizte Modulation,
- Chiprate 2,167 Mchips/s,
- Schaltungs- oder packetvermittelte Datenraten von 1 Mbit/s und 2 Mbit/s für Indoor-Umgebungen.

Für den in FIG 10a gezeigten Fall nimmt die Steuereinrichtung ST nach FIG 2, die üblicherweise in einem Basisstationscontroller BSC realisiert wird, eine Übergabe der Verbindungen V10 und Vi vom dritten auf den ersten Zeitschlitz ts vor, so daß der dritte Zeitschlitz ts wahlweise auch für eine TD/CDMA-Übertragung genutzt werden kann.

Diese Verteilung wird dadurch eingeleitet, daß die Belegung des dritten Zeitschlitzen ts unter einen ersten Schwellwert von 3 gesunken ist und ausreichend erste Frequenzkanäle in anderen GSM-Zeitschlitzen zur Verfügung standen. Diese Verteilung kann auch dadurch ausgelöst werden, daß eine Verbindungen V1 zu einer Mixed-Mode Mobilstation MS führt, die eine höhere Datenrate oder einen neuen Dienst anfordert, so daß ein Wechsel der Verbindung V1 zu einer hochratigen TD/CDMA-Übertragung nötig wird. Dabei findet eine Übergabe innerhalb einer Basisstation BS vom ersten zum zweiten Frequenzkanal statt.

Schon beim Verbindungsaufbau werden Mixed-Mode Mobilstationen MS bevorzugt an Basisstationen BS übergeben, die auf dem zweiten Frequenzkanal freie Übertragungskapazität anbieten können. Dies geschieht, selbst wenn ein Verbindungsaufbau auch zu anderen Basisstationen BS möglich wäre. Eine Übergabe findet ebenfalls statt, wenn sich mehrere Mixed-Mode Mobilstationen MS in einer Funkzelle anmelden, die eventuell einen höherratigen Dienst nachfragen werden. Ist beispielsweise das Verhältnis der Verbindungen V1, V2, V3 (Mixed-Mode) zu den Verbindungen V4, V5, V6 gleich 1 und erreicht damit einen zweiten Schwellwert, dann wird ebenfalls ein zweiter Zeitschlitz ts für die TD/CDMA-Übertragung vorbereitet.

In FIG 10b werden verschiedene Varianten der Nutzung von Zeitschlitzen ts durch die Basisstation BS gezeigt.

Der Basisstation BS steht beispielsweise ein Frequenzbereich zur Verfügung, der acht GSM-Kanälen, d.h. ersten Frequenzkanälen entspricht. Dieser Frequenzbereich wird entweder von maximal acht Frequenzkanälen für ein TDMA-Übertragungsverfahren nach GSM genutzt, oder für eine breitbandige Übertragung mit TD/CDMA im zweiten Frequenzkanal. Die Zuteilung ist entweder fest oder dynamisch (siehe Umverteilung im unteren Teil).

Eine zweite Variante sieht vor, daß eine Anzahl erster Frequenzkanäle in jedem Zeitschlitz ts für die TDMA-Übertragung genutzt wird und weitere Teile des Frequenzbereiches der Basisstation BS zur TDMA-Übertragung oder zur TD/CMDA-Übertragung zugeteilt werden. Es braucht hierbei nicht immer der gesamte Frequenzbereich genutzt werden.

Weiterhin können die ersten und zweiten Frequenzkanäle in den Zeitschlitzen ts ständig frequenzmäßig getrennt sein, entweder in einem GSM-Frequenzbereich (Variante 3) oder alternativ die TDMA-Übertragung in einem GSM-Frequenzbereich und die TD/CDMA-Übertragung in einem UMTS-Frequenzbereich (Variante 4). Für alle Varianten ergeben sich durch die Nutzung einer gemeinsamen Basisstation BS und von aus dem GSM-Mobilfunknetz übernommen Komponenten erhebliche Vorteile für einen schrittweisen Übergang zur Implementierung von Übertragungsverfahren mit höheren Datenraten.

Ein Meldungsaustausch zwischen einer Mobilstation MS und dem Funk-Kommunikationssystem beginnt mit einer netzseitigen Information über einen Organisationskanal. Diese Informationen signalisieren der Mobilstation MS, welche Standards in der entsprechenden Funkzelle unterstützt werden und welche Frequenzkanäle zur Verfügung stehen. Hierbei wird ein Organisationskanal aus dem GSM-Mobilfunknetz genutzt.

Gibt der Teilnehmer der Mobilstation MS einen Gesprächswunsch (MOC) an oder wird ein Verbindungsaufbau zur Mobilstation MS (MTC) gewünscht, so wird der Verbindungsaufbau angemeldet und der gewünschte Dienst signalisiert, worauf der Basisstationscontroller BSC eine Zuweisung von Frequenzband, Zeitschlitz und Übertragungsverfahren vornimmt und über die Basisstation BS der Mobilstation MS signalisiert. Die Zuweisung wird von Steuermitteln SE der Basisstation BS bzw. von Steuereinrichtungen ST nach FIG 2 unterstützt. Daraufhin wird die Verbindung Vi im signalisierten Frequenzkanal betrieben.

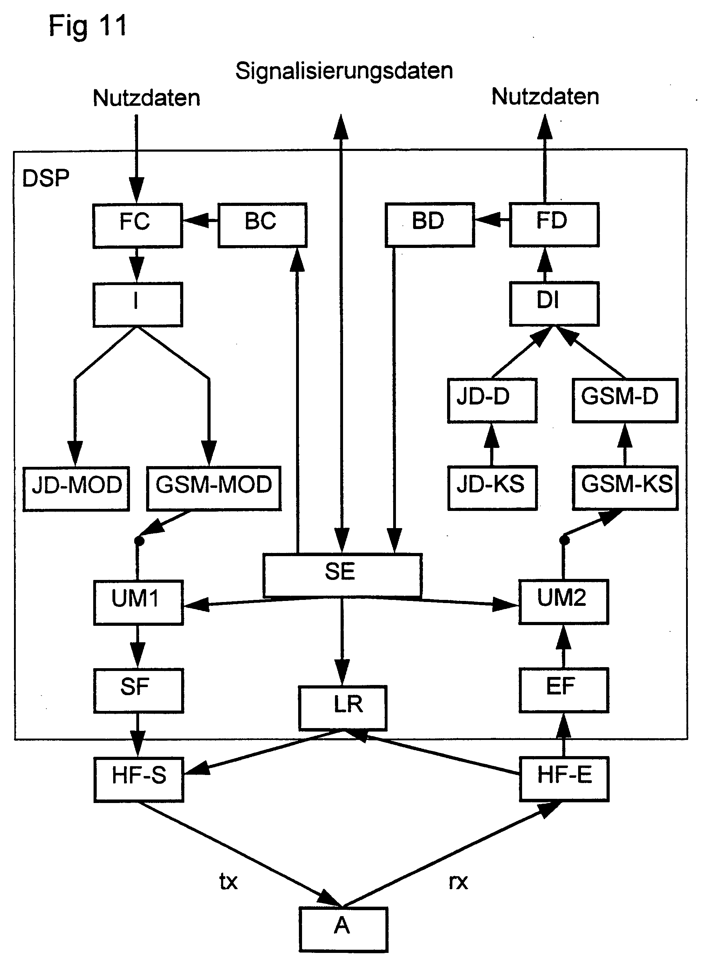

Der Aufbau einer Sende/Empfangseinrichtung TRX3 mit beiden Übertragungsverfahren innerhalb einer Basisstation ist vereinfacht in Fig. 11 gezeigt, wobei eine Aufteilung in ein Digitalteil, das durch digitale Signalverarbeitungsmittel DSP realisiert wird, und eine Hochfrequenzeinrichtung, die aus einem Sendeteil HF-S und einem Empfangsteil HF-E besteht, vorgenommen ist. Das Sendeteil HF-S und das Empfangsteil HF-E sind mit einer gemeinsamen Antenneneinrichtung A verbunden. Gemeinsame Komponenten für mehrere Sende/Empfangseinrichtungen TRX1, TRX2, TRX3, wie z.B. Verstärker, Synchronisations- und Taktbaugruppen, Schnittstellen zum Basisstationscontroller BSC und zum Organisations- und Wartungszentrum OMC sind nicht dargestellt.

Der Sendepfad der digitalen Signalverarbeitung besteht aus einem Faltungscodierer FC zur Kanalcodierung von Nutzdaten und Signalisierungsdaten, die zuvor in einem Blockcodierer BC blockcodiert wurden. Anschließend werden in einem Interleaver I die Daten verwürfelt und je nach Übertragungsstandard einem Modulator GSM-MOD zur GSM-Modulierung oder einem Modulator JD-MOD zur TD/CDMA-Modulierung zugeführt. Ein erstes Umschaltmittel UM1, das wie auch ein später gezeigtes zweites Umschaltmittel UM2 durch ein Steuermittel SE gesteuert wird, verbindet den ausgewählten Modulator GSM-MOD bzw. JD-MOD mit einem digitalen Sendefilter SF und weiter mit dem Sendeteil HF-S. Ein Mittel LR zur Sendeleistungsregelung steuert nach Vorgaben der Steuermittel SE die Sendeleistung für Sendesignale tx.

Im Empfangspfad werden durch die Antenneneinrichtung A empfangene Empfangssignale rx im Empfangsteil HF-E aufgearbeitet und der digitalen Signalverarbeitung zugeführt. Ein digitales Empfangsfilter EF filtert die breitbandigen Empfangssignale rx und gibt über das zweite Umschaltmittel UM2 die Signale an einen Kanalschätzer ab, der entweder ein Kanalschätzer GSM-KS nach dem GSM-Standard oder ein Kanalschätzer JD-KS nach dem TD/CDMA-Standard ist. Nach der Kanalschätzung werden die Signale dem jeweiligen Datenschätzer GSM-D oder JD-D zugeführt, die die Datendetektion vornehmen. In einem Deinterleaver DI werden die Daten beider Pfade wieder gemeinsam entwürfelt und anschließend einem Faltungsdecodierer FD zur Kanaldecodierung zugeführt. Signalisierungsinformationen werden einem Blockdecodierer BD zugeführt, der diese Daten decodiert an das Steuermittel SE abgibt.

Das Steuermittel SE gibt die zu sendenden oder die empfangenen Signalisierungsdaten in den Sende- bzw. Empfangspfad weiter und stellt die Verbindung zu netzseitigen Signalisierungskanälen zum Basisstationscontroller BSC her.

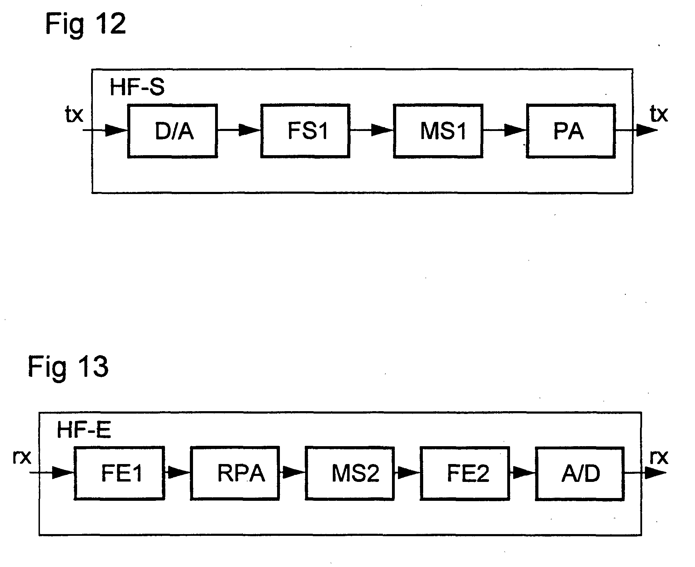

Das Sendeteil HF-S nach Fig. 12 enthält einen Digital/Analog-Wandler D/A für Real- und Imaginärteil, erste analoge Sendefilter FS1 zum Tiefpaßfiltern der Signale im Basisband, eine erste Mischstufe MS1 zum Umsetzen der Sendesignale tx ins Sendefrequenzband, und einen Leistungsverstärker PA zum Verstärken der Sendesignale tx.

Das Empfangsteil HF-E nach Fig. 13 enthält einen ersten analogen Empfangsfilter EF1, einen Empfangsverstärker RPA zum Messen und Verstärken der Empfangssignale rx, eine zweite Mischstufe MS2 zum Umsetzen der Empfangssignale rx ins Basisband (es können auch mehrere Mischstufen genutzt werden), zweite analoge Empfangsfilter EF2 und schließlich einen Analog/Digital-Wandler A/D für Real- und Imaginärteil, der digitale Empfangssignale rx erzeugt, die in dem digitalen Signalverarbeitungsmittel DSP verarbeitbar sind.

Die Hochfrequenzeinrichtungen, d.h. Empfangteil HF-E und Sendeteil HF-S, sind breitbandig, beispielsweise für B=1,6 MHz ausgelegt. Im folgenden wird nur der TD/CDMA-Modus näher erläutert.

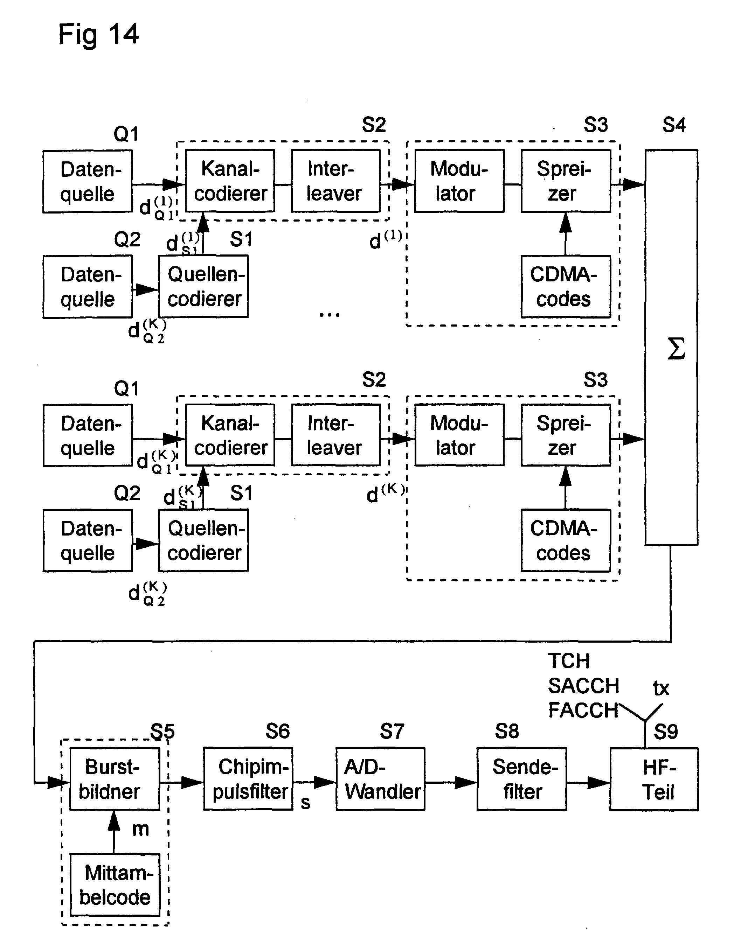

In Fig. 14 ist der Sendepfad der Einrichtung detailliert dargestellt. Er ist in der üblichen Beschreibungsform zur Modellierung und Simulation eines nachrichtentechnischen Systems dargestellt, bei dem die Abhängigkeit zwischen verschiedenen Funktionen und die Systemstruktur dargestellt ist.

Im Teilmodul S2 werden die Eingangsdaten $d^{(k)}$, k=1..K, die wahlweise aus den uncodierten Daten $d_{Q1}^{(k)}$, k=1..K, oder aus den im Teilmodul S1 quellencodierten Daten $d_{Q2}^{(k)}$, k=1..K, hervorgehen, der Kanalcodierung mit anschließenden Interleaving unterzogen. Die Daten von einer ersten Datenquelle Q1 werden über einen Nutzdatenkanal TCH übertragen, die Daten von einer zweiten Datenquelle Q2 über einen Signalisierungskanal SACCH bzw. FACCH.

Eine n-PSK Modulation und eine Spreizung der Daten mit den modulierten teilnehmerspezifischen CDMA-Codes $c^{(k)}$, k=1..K, erfolgt im Teilmodul S3. Danach folgt die Summation aller gespreizten Datenfolgen im Teilmodul S4 und ein anschliessendes Integrieren der Mittambel in die Burststruktur im Teilmodul S5. Im Teilmodul S6 folgt die spektrale Formung des Sendesignals s; in den Modulen S7 bis S9 die Umsetzung des zeitdiskreten 4-fach überabgetasteten Sendesignals im Basisband $s_{S6}$ in den zeit- und wertekontinuierlichen Bandpaßbereich des Sendefrequenzbandes.

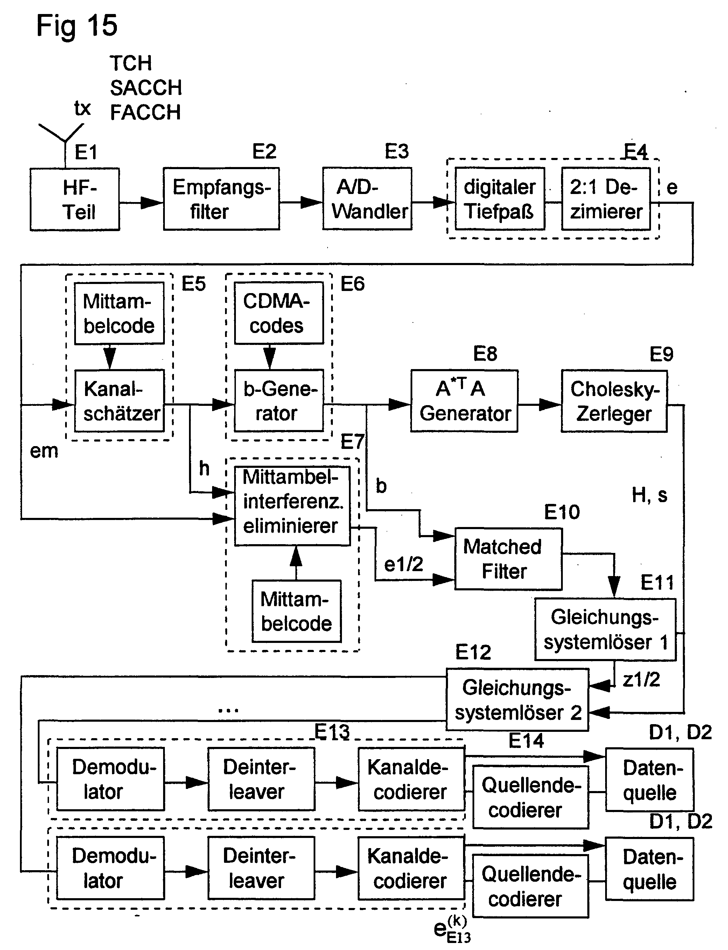

In Fig. 15 ist der Empfangspfad der Einrichtung detailliert dargestellt. Im Teilmodul E1 erfolgt die Umsetzung der Empfangssignale rx aus dem Sendefrequenzband in den Tiefpaßbereich und die Aufspaltung in eine reale und eine imaginäre Komponente. Im Teilmodul E2 erfolgt eine analoge Tiefpaßfilterung und im Teilmodul E3 schließlich eine 2-fache Überabtastung des Empfangssignals mit 13/3 MHz und einer Wortbreite von 12 bit.

Im Teilmodul E4 erfolgt eine digitale Tiefpaßfilterung mit einem Filter der Bandbreite 13/6 MHz mit möglichst hoher Flankensteilheit zur Kanaltrennung. Anschließend erfolgt im Teilmodul E4 eine 2:1 Dezimierung des 2-fach überabgetasteten Signals.

Das derart gewonnene Empfangssignal e besteht im wesentliche aus zwei Teilen, nämlich aus einem Anteil em zur Kanalschätzung und aus den Anteilen e1 und e2 zur Datenschätzung. Im Teilmodul E5 erfolgt die Schätzung aller Kanalimpulsantworten $h^{(k)}$ mittels eines bekannten Mittambelgrundcodes m aller im jeweiligen Zeitschlitz übertragener Datenkanäle.

Im Teilmodul E6 werden Parameter $b^{(k)}$ für angepaßte Filter für jeden Datenkanal unter Verwendung der CDMA-Codes $c^{(k)}$ bestimmt. Im Teilmodul E7 erfolgt die Eliminierung der von den Mittambeln $m^{(k)}$ herrührenden Interferenzen in den zur Datenschätzung benutzten Empfangsblöcken e1/2. Dies ist durch die Kenntnis von $h^{(k)}$ und $m^{(k)}$ möglich.

Im Teilmodul E8 erfolgt die Berechnung der Kreuzkorrelationsmatrix $A^{*T} A$. Da $A^{*T} A$ Töplitzstruktur hat, ist hier nur die Berechnung eines kleines Teils der Matrix nötig, der dann zur Erweiterung auf die komplette Größe verwendet werden kann. Im Teilmodul E9 erfolgt eine Cholesky-Zerlegung von $A^{*T}A$ in $H^{*T}H$, wobei H eine obere Dreiecksmatrix ist. Aufgrund der Töplitzstruktur von $A^{*T}A$ hat auch H näherungsweise eine Töplitzstuktur und muß nicht vollständig berechnet werden. Ein Vektor s repräsentiert die Kehrwerte der Diagonalelemente von H, die vorteilhaft bei den Gleichungssystemlösern benutzt werden können.

Im Teilmodul E10 erfolgt eine angepaßte Filterung (matched filter) der Empfangssymbolfolgen e1/2 mit $b^{(k)}$. Teilmodul E11 realisiert die Gleichungssystemlöser 1 für $H^{*T}z1/2=e1/2$, und Teilmodul E12 die Gleichungssystemlöser 2 für $H*d1/2=z1/2$. Im Teilmodul E13 werden die geschätzten Daten d1/2 demoduliert, entwürfelt und schließlich mittels Viterbi-Decodierer faltungsdecodiert. Die decodierten Datenblöcke $d^{(k)}_{E13}$ werden wahlweise einer ersten Datensenke D1 oder über den Quellendecodierer E14 einer zweiten Datensenke D2 zugeführt. Die Quellendecodierung ist bei Datenblöcken notwendig, die über Signalisierungskanäle SACCH oder FACCH übertragen wurden.

Das in den Ausführungsbeispielen vorgestellte Funk-Kommunikationssystem zur Datenübertragung schafft ein Mobilfunknetz mit einer Kombination von FDMA, TDMA und CDMA und ist für Anforderungen an Systeme der 3. Generation geeignet. Insbesondere eignet es sich für eine Implementierung in bestehende GSM-Mobilfunknetze, für die ein nur geringer Änderungsaufwand nötig ist.

**Patentansprüche**

1. Verfahren zur Datenübertragung in einem Mobilfunknetz mit zumindest einer Basisstation (BS), bei dem

   - zwischen der Basisstation (BS) und Mobilstationen (MS) zumindest ein erster Frequenzkanal zur Datenübertragung und zur Übertragung von Signalisierungsinformation mit einem TDMA-Übertragungsverfahren zur Verfügung steht,
   - die Basisstation (BS) zusätzlich einen zweiten breitbandigen Frequenzkanal mit einem TD/CDMA-Übertragungsverfahren zur Verfügung stellt,
   - Zeitraster beider Frequenzkanäle miteinander synchronisiert sind,
   - durch die Basisstation (BS) in einem Zeitschlitz (ts) das TDMA-Übertragungsverfahren unterstützt wird,
   - und in dem Zeitschlitz (ts) eine Verbindung (V1) im ersten Frequenzkanal aufgebaut wird

   **dadurch gekennzeichnet,**
   **dass** während der Verbindung (V1) bei zusätzlich benutzten Diensten eine Übergabe der Verbindung (V1) auf den zweiten Frequenzkanal erfolgt.

2. Verfahren nach Anspruch 1, bei dem sich die Frequenzbänder des ersten und zweiten Frequenzkanals zumindest teilweise überlappen.

3. Verfahren nach Anspruch 2, bei dem die Bandbreite des zweiten Frequenzkanals zumindest der achtfachen Bandbreite des ersten Frequenzkanals ist.

4. Verfahren nach einem der vorherigen Ansprüche, bei dem ein Basisstationscontroller (BSC) eine Verteilung mehrerer Verbindungen (Vi) auf die Zeitschlitze derartig steuert, daß ein Zeitschlitz (ts) von einem TDMA- bzw. TD/CDMA-Übertragungsverfahren an das jeweilige andere Übertragungsverfahren übergeben wird.

5. Verfahren nach Anspruch 4, bei dem der Basisstationscontroller (BSC) eine Verteilung mehrerer Verbindungen (Vi) auf die Zeitschlitze (ts) derartig steuert, daß die Übergabe einer Verbindung (V1) zu dem jeweilig anderen Übertragungsverfahren erfolgt, sobald die Auslastung eines Zeitschlitzes (ts) unter einen ersten Schwellwert sinkt.

6. Verfahren nach Anspruch 4, bei dem der Basisstationscontroller (BSC) eine Verteilung mehrerer Verbindungen (Vi) auf die Zeitschlitze (ts) derartig steuert, daß die Übergabe einer Verbindung (Vs) zu dem jeweilig anderen Übertragungsverfahren erfolgt, sobald das Verhältnis von Mobilstation (MS) mit TD/CDMA-Tauglichkeit zu sonstigen Mobilstationen (MS) innerhalb einer Funkumgebung einen zweiten Schwellwert erreicht.

7. Verfahren nach einem der vorherigen Ansprüche, bei dem auch Übergaben von Verbindungen (Vi) von einer zweiten Basisstationen (BS) ohne TD/CDMA-Tauglichkeit bevorzugt zur ersten Basisstation (BS) erfolgen.

8. Verfahren nach einem der vorherigen Ansprüche, bei dem zur Zuweisung von Verbindungen (Vi) zu einem Zeitschlitz (ts) die Signalisierungsinformation des ersten Frequenzkanals benutzt wird.

9. Verfahren nach einem der vorherigen Ansprüche, bei dem zur Übergabe von Verbindungen (Vi) oder für einen Verbindungsaufbau eine Abfrage einer gewünschten Datenrate erfolgt, und danach der erste oder zweite Frequenzkanal ausgewählt wird.

**10.** Verfahren nach einem der vorherigen Ansprüche, bei dem

der erste und zweite Frequenzkanal durch unterschiedliche Sende/Empfangseinrichtungen (TRX1, TRX2) der ersten Basisstation (BS) realisiert werden, jedoch weitere Baugruppen (A, HF-S, HF-E) gemeinsam benutzt werden.

**11.** Verfahren nach einem der Ansprüche 1 bis 9, bei dem

der erste und zweite Frequenzkanal in einer gemeinsamen Sende/Empfangseinrichtungen (TRX3) der ersten Basisstation (BS) realisiert werden.

**12.** Verfahren nach einem der vorherigen Ansprüche, bei dem

der erste und zweite Frequenzkanal unterschiedlichen Zellgrößen gemäß einem hierarchischen Zellmodell zugeordnet sind.

**13.** Verfahren nach einem der vorherigen Ansprüche, bei dem

in Aufwärts- und Abwärtsrichtungen unterschiedliche Datenraten benutzt werden.

**14.** Verfahren nach einem der vorherigen Ansprüche, bei dem

in Aufwärts- und Abwärtsrichtungen gleiche Frequenzbänder, jedoch unterschiedliche Zeitschlitze benutzt werden.

**15.** Verfahren nach einem der vorherigen Ansprüche, bei dem

in Aufwärts- und Abwärtsrichtungen unterschiedliche Frequenzbänder benutzt werden.

**16.** Sende/Empfangseinrichtung (TRX3) für eine Basisstation (BS) eines Funk-Kommunikationssystems,

- mit einem Signalverarbeitungsmittel (DSP) zum Erzeugen und Auswerten von digitalen Signalen,
- mit zumindest einer Hochfrequenzeinrichtung (HF-E, HF-S) zum Erzeugen bzw. Verarbeiten von hochfrequenten Signalen (tx, rx),

die derartig ausgeprägt sind,
daß zumindest ein erster Frequenzkanal zur Datenübertragung und zur Übertragung von Signalisierungsinformation mit einem TDMA-Übertragungsverfahren und zusätzlich ein zweiter breitbandigen Frequenzkanal mit einem TD/CDMA-Übertragungsverfahren zur Verfügung steht, deren Zeitraster miteinander synchronisiert sind, wobei in einem Zeitschlitz (ts) das TDMA-Übertragungsverfahren unterstützt wird und in dem Zeitschlitz (ts) eine Verbindung (V1) im ersten Frequenzkanal aufgebaut wird
**dadurch gekennzeichnet,**
**daß** sie weiterhin derartig ausgeprägt sind, daß während der Verbindung (V1) bei zusätzlich benutzten Diensten eine Übergabe der Verbindung (V1) auf den zweiten Frequenzkanal erfolgt.

**17.** Funk-Kommunikationssystem mit zumindest einem Basisstationscontroller (BSC) und einer Basisstation (BS),
wobei die Basisstation (BS) derart ausgeprägt ist, daß

- gemäß einem TDMA-Verfahren eine Datenübertragung in einem ersten Frequenzkanal durchgeführt wird,
- zumindest eine Sende/Empfangseinrichtung (TRX2, TRX3) für einen zweiten breitbandigen Frequenzkanal mit einem TD/CDMA-Übertragungsverfahren enthalten ist und die Zeitraster beider Frequenzkanäle miteinander synchronisiert sind, in einem Zeitschlitz (ts) das TDMA-Übertragungsverfahren unterstützt wird,
- und in dem Zeitschlitz (ts) eine Verbindung (V1) im ersten Frequenzkanal aufgebaut wird

**dadurch gekennzeichnet,**
**dass** während der Verbindung (V1) bei zusätzlich benutzten Diensten eine Übergabe der Verbindung (V1) auf den zweiten Frequenzkanal erfolgt.

**18.** Funk-Kommunikationssystem nach Anspruch 17, bei dem

der Basisstationscontroller (BSC) zur Vermittlung von Daten mit unterschiedlicher Datenrate entsprechend den zwei unterschiedlichen Übertragungsverfahren ausgestaltet ist.

**19.** Funk-Kommunikationssystem nach Anspruch 17, mit zumindest einer Transcodiereinheit (TRAU) die zur Kodierung und Dekodierung von Daten mit unterschiedlicher Datenrate entsprechend der zwei unterschiedlichen Übertragungsverfahren ausgestaltet ist.

### Claims

**1.** Method for transmitting data in a mobile radio network having at least one base station (BS), in which

- at least one first frequency channel for transmitting data and for transmitting signalling information using a TDMA transmission method is available between the base station (BS) and mobile stations (MS),
- the base station (BS) additionally makes available a second broadband frequency channel using a TD/CDMA transmission method,
- timing patterns of the two frequency channels are synchronized with one another,
- the TDMA transmission method is supported in one time slot (ts) by the base station (BS),
- and a connection (V1) is set up in the time slot (ts) in the first frequency channel,

**characterized in that** during the connection (V1) with additionally used services, a transfer of the connection (V1) to the second frequency channel takes place.

2. Method according to Claim 1, in which the frequency bands of the first and second frequency channels overlap at least partially.

3. Method according to Claim 2, in which the bandwidth of the second frequency channel is at least eight times the bandwidth of the first frequency channel.

4. Method according to one of the preceding claims, in which a base station controller (BSC) controls distribution of a plurality of connections (Vi) among the time slots in such a way that a time slot (ts) of a TDMA or TD/CDMA transmission method is transferred to the respective other transmission method.

5. Method according to Claim 4, in which the base station controller (BSC) controls distribution of a plurality of connections (Vi) among the time slots (ts) in such a way that the transfer of a connection (V1) to the respective other transmission method takes place as soon as the utilization rate of a time slot (ts) drops below a first threshold value.

6. Method according to Claim 4, in which the base station controller (BSC) controls distribution of a plurality of connections (Vi) among the time slots (ts) in such a way that the transfer of a connection (Vs) to the respective other transmission method takes place as soon as the ratio of mobile station (MS) with TD/CDMA compatibility to other mobile stations (MS) within a radio environment reaches a second threshold value.

7. Method according to one of the preceding claims, in which transfers of connections (Vi) from a second base station (BS) without TD/CDMA compatibility preferably to the first base station (BS) also take place.

8. Method according to one of the preceding claims, in which the signalling information of the first frequency channel is used to allocate connections (Vi) to a time slot (ts).

9. Method according to one of the preceding claims, in which, in order to transfer connections (Vi) or for a connection setup, a desired data rate is interrogated and the first or second frequency channel is then selected.

10. Method according to one of the preceding claims, in which the first and second frequency channels are implemented by different transceivers (TRX1, TRX2) of the first base station (BS), but further modules (A, HF-S, HF-E) are used jointly.

11. Method according to one of Claims 1 to 9, in which the first and second frequency channels are implemented in a common transceiver (TRX3) of the first base station (BS).

12. Method according to one of the preceding claims, in which the first and second frequency channels are assigned to different cell sizes according to a hierarchical cell model.

13. Method according to one of the preceding claims, in which different data rates are used in uplink and downlink directions.

14. Method according to one of the preceding claims, in which identical frequency bands but different time slots are used in uplink and downlink directions.

15. Method according to one of the preceding claims, in which different frequency bands are used in uplink and downlink directions.

16. Transceiver (TRX3) for a base station (BS) of a radio communications system,

- having a signal processing means (DSP) for generating and evaluating digital signals,
- having at least one radiofrequency device (HF-E, HF-S) for generating and/or processing radiofrequency signals (tx, rx),

which are embodied in such a way
that at least a first frequency channel is available for transmitting data and for transmitting signalling information using a TDMA transmission method, and additionally a second broadband frequency channel using a TD/CDMA transmission method is available, the timing patterns of which frequency channels are synchronized with one another, the TDMA transmission method being supported in one time slot (ts), and a connection (V1) being set up in the time slot (ts) in the first frequency channel, **characterized in that** they are also embodied in such a way that during the connection (V1) with additionally used services, a transfer of the connection (V1) to the second frequency channel takes place.

**17.** Radio communications system having at least one base station controller (BSC) and a base station (BS),
the base station (BS) being embodied in such a way that

- a transmission of data is carried out in a first frequency channel using a TDMA method,
- at least one transceiver (TRX2, TRX3) for a second broadband frequency channel using a TD/CDMA transmission method is included, and the timing patterns of the two frequency channels are synchronized with one another,
- the TDMA transmission method is supported in one time slot (ts),
- and a connection (V1) is set up in the time slot (ts) in the first frequency channel,

**characterized in that** during the connection (V1) with additionally used services, a transfer of the connection (V1) to the second frequency channel takes place.

**18.** Radio communications system according to Claim 17, in which the base station controller (BSC) is configured to switch data with different data rates in accordance with the two different transmission methods.

**19.** Radio communications system according to Claim 17, having at least one transcoder unit (TRAU) which is configured to encode and decode data with different data rates in accordance with the two different transmission methods.

**Revendications**

**1.** Procédé de transmission de données dans un réseau de radiocommunication mobile comprenant au moins une station de base (BS) dans laquelle

- au moins un premier canal de fréquence pour la transmission de données et pour la transmission d'informations de signalisation par un procédé de transmission TDMA existe entre la station de base (BS) et des stations mobiles (MS),
- la station de base (BS) dispose en supplément d'un deuxième canal de fréquence à large bande qui correspond à un procédé de transmission TD/CDMA,
- des trames temporelles des deux canaux de fréquence sont synchronisées l'une par rapport à l'autre,
- le procédé de transmission TDMA est soutenu par la station de base (BS) dans une fenêtre temporelle (ts), et
- une liaison (V1) est établie dans la fenêtre temporelle (ts) dans le premier canal de fréquence,

**caractérisé en ce que**
pendant la liaison (V1), si des services supplémentaires sont utilisés, la liaison (V1) est transférée sur le deuxième canal de fréquence.

**2.** Procédé selon la revendication 1, dans lequel les bandes de fréquence du premier et du deuxième canal de fréquence se superposent au moins en partie.

**3.** Procédé selon la revendication 2, dans lequel la largeur de bande du deuxième canal de fréquence représente au moins huit fois la largeur de bande du premier canal de fréquence.

**4.** Procédé selon l'une des revendications précédentes, dans lequel un contrôleur de station de base (BSC) commande une répartition de plusieurs liaisons (Vi) entre les fenêtres temporelles de telle sorte qu'une fenêtre temporelle (TS) d'un procédé de transmission TDMA resp. TD/CDMA est transférée à l'autre procédé de transmission .

**5.** Procédé selon la revendication 4, dans lequel le contrôleur de station de base (BSC) commande une répartition de plusieurs liaisons (Vi) entre les fenêtres temporelles (ts) de telle sorte que le transfert d'une liaison (V1) vers l'autre procédé de transmission s'effectue dès que l'occupation d'une fenêtre temporelle (ts) descend en dessous d'une première valeur de seuil.

**6.** Procédé selon la revendication 4, dans lequel le contrôleur de station de base (BSC) commande une répartition de plusieurs liaisons (Vi) entre les fenêtres temporelles (ts) de telle sorte que le transfert d'une liaison (Vs) vers l'autre procédé de transmission s'effectue dès que la proportion entre les stations mobiles (MS) présentant une capacité TD/CDMA et les autres stations mobiles (MS) dans un domaine radio atteint une deuxième valeur de seuil.

**7.** Procédé selon l'une des revendications précédentes, dans lequel des transferts de liaison (Vi) d'une deuxième station de base (BS) sans capacité TD/CDMA s'effectue de préférence vers la première station de base (BS).

**8.** Procédé selon l'une des revendications précédentes, dans lequel pour l'attribution de liaisons (Vi) à une fenêtre temporelle (ts), on utilise des informations de signalisation du premier canal de fréquence.

**9.** Procédé selon l'une des revendications précédentes, dans lequel, pour le transfert de liaisons (Vi) ou pour l'établissement d'une liaison, un débit de données souhaité est demandé, le premier ou le deuxième canal de fréquence étant sélectionné en fonction de ce débit.

10. Procédé selon l'une des revendications précédentes, dans lequel le premier et le deuxième canal de fréquence sont réalisés par différents dispositifs émetteurs/récepteurs (TRX1, TRX2) de la première station de base (BS), mais d'autres modules (A, HF-S, HF-E) sont utilisés en commun.

11. Procédé selon l'une des revendications 1 à 9, dans lequel le premier et le deuxième canal de fréquence sont réalisés dans un dispositif émetteur/récepteur (TRX3) commun de la première station de base (BS).

12. Procédé selon l'une des revendications précédentes, dans lequel le premier et le deuxième canal de fréquence sont associés à des cellules de tailles différentes en fonction d'un modèle hiérarchisé des cellules.

13. Procédé selon l'une des revendications précédentes, dans lequel des débits de données différents sont utilisés dans le sens montant et dans le sens descendant.

14. Procédé selon l'une des revendications précédentes, dans lequel les mêmes bandes de fréquence mais des fenêtres temporelles différentes sont utilisées dans le sens montant et dans le sens descendant.

15. Procédé selon l'une des revendications précédentes, dans lequel des bandes de fréquence différentes sont utilisées dans le sens montant et dans le sens descendant.

16. Dispositif émetteur/récepteur (TRX3) pour une station de base (BS) d'un système de radiocommunication,

   - avec un moyen de traitement de signaux (DSP) pour créer et identifier des signaux numériques,
   - avec au moins un dispositif à haute fréquence (HF-E, HF-S) pour la création resp. le traitement de signaux à haute fréquence (tx, rx),

qui sont conçus de telle sorte qu'au moins un premier canal de fréquence est disponible pour la transmission de données ou pour la transmission d'informations de signalisation par un procédé de transmission TDMA, et en supplément un deuxième canal de fréquence à large bande avec un procédé de transmission TD/CDMA est disponible, les trames temporelles de l'un et de l'autre étant synchronisées l'une par rapport à l'autre, le procédé de transmission TDMA étant soutenu dans une fenêtre temporelle (ts) et une liaison (V1) étant établie dans la fenêtre temporelle (ts) dans le premier canal de fréquence,

**caractérisé en ce qu'**ils sont en outre conçus de telle sorte que pendant la liaison (V1), si des services supplémentaires sont utilisés, un transfert de la liaison (V1) s'effectue vers le deuxième canal de fréquence.

17. Système de radiocommunication comprenant au moins un contrôleur de station de base (BSC) et une station de base (BS), dans laquelle la station de base (BS) est conçue de telle sorte que

   - une transmission de données est exécutée dans un premier canal de fréquence selon un procédé TDMA,
   - au moins un dispositif émetteur/récepteur (TRX2, TRX3) pour un deuxième canal de fréquence à large bande avec un procédé de transmission TD/CDMA est prévu, et les trames temporelles des deux canaux de fréquence sont synchronisées l'une par rapport à l'autre,
   - le procédé de transmission TDMA est soutenu dans une fenêtre temporelle (ts), et
   - une liaison (V1) est établie dans la fenêtre temporelle (ts) dans le premier canal de fréquence,

**caractérisé en ce que**

pendant la liaison (V1), lorsque des services supplémentaires sont utilisés, un transfert de la liaison (V1) vers le deuxième canal de fréquence a lieu.

18. Système de radiocommunication selon la revendication 17, dans lequel le contrôleur de station de base (BSC) est configuré pour la transmission de données à différents débits de données en correspondance aux deux procédés différents de transmission.

19. Système de radiocommunication selon la revendication 17, avec au moins une unité de transcodage (TRAU) qui est configurée pour le codage et le décodage de données à différents débits de données en correspondance aux deux procédés de transmission différents.

Fig 1

# Fig 2

TD/CDMA

MS
(TD/CDMA)

BTS
(TD/CDMA)

IN
CAMEL

MS
(dual)

TD/CDMA

GSM

Funk-
Kommunikationssystem

ST

TD/CDMA

AN | ISDN

AN | GSM

AN | B-ISDN

Internet

drahtloser
Teilnehmeranschluß

## Fig 3

f

| TRX2 | TD/CDMA |
|------|---------|

| TRX1 | GSM900 oder GSM1800 oder PCS1900 |
|------|----------------------------------|

## Fig 4

f

| TRX3 | GSM900 oder GSM1800 oder PCS1900 |
|------|----------------------------------|
|  | GSM900 oder GSM1800 oder PCS1900 |
|  | GSM900 oder GSM1800 oder PCS1900 |
|  | GSM900 oder GSM1800 oder PCS1900 |
|  | GSM900 oder GSM1800 oder PCS1900 |
|  | GSM900 oder GSM1800 oder PCS1900 |
|  | GSM900 oder GSM1800 oder PCS1900 |
|  | GSM900 oder GSM1800 oder PCS1900 |

TD/CDMA

Fig 5

GSM

BTS
(GSM)

MS
(GSM)

Fig 6

GSM

BTS
(GSM)

MS
(dual)

Fig 7

TD/CDMA

BTS
(UMTS
/dual)

MS
(dual)

Fig 8

GSM

BTS
(dual)

MS
(GSM)

Fig 9

MS                              BTS                              BSC

Organisationskanal (GSM und/oder TD/CDMA verfügbar)

Anmelden (MTC, MOC)

Zuweisung von Frequenzband, Zeitschlitz und Übertragungsverfahren

Verbindungsaufbau

# Fig 10 a

# Fig 10 b

## Fig 11

Signalisierungsdaten

Nutzdaten                      Nutzdaten

DSP

FC ← BC           BD ← FD

I                          DI

JD-D    GSM-D

JD-MOD   GSM-MOD         JD-KS   GSM-KS

SE

UM1                  UM2

SF           LR           EF

HF-S                 HF-E

tx                  rx

A

## Fig 12

HF-S

tx → [ D/A ] → [ FS1 ] → [ MS1 ] → [ PA ] → tx

## Fig 13

HF-E

rx → [ FE1 ] → [ RPA ] → [ MS2 ] → [ FE2 ] → [ A/D ] → rx

## Fig 14

## Fig 15

TCH
SACCH
tx  FACCH

E1
**HF-Teil**

E2
**Empfangs-filter**

E3
**A/D-Wandler**

E4
**digitaler Tiefpaß** | **2:1 De-zimierer**  e

E5
**Mittam-belcode**

E6
**CDMA-codes**

**Kanal-schätzer**

**b-Gene-rator**

E8
**A*T A Generator**

E9
**Cholesky-Zerleger**

em

h

E7
**Mittambel-interferenz. eliminierer**

b

**Mittam-belcode**

e1/2

E10
**Matched Filter**

H, s

E11
**Gleichungs-systemlöser 1**

E12
**Gleichungs-systemlöser 2**

z1/2

...

E13
**Demodu-lator**  →  **Deinter-leaver**  →  **Kanalde-codierer**

E14
**Quellende-codierer**

D1, D2
**Daten-quelle**

**Demodu-lator**  →  **Deinter-leaver**  →  **Kanalde-codierer**

**Quellende-codierer**

D1, D2
**Daten-quelle**

$e_{E13}^{(k)}$